(19) Europäisches Patentamt
European Patent Office
Office européen des brevets

(11) **EP 4 546 014 A1**

(12) **EUROPEAN PATENT APPLICATION**

(43) Date of publication:
**30.04.2025 Bulletin 2025/18**

(21) Application number: **23206396.6**

(22) Date of filing: **27.10.2023**

(51) International Patent Classification (IPC):
**G01S 19/07** $^{(2010.01)}$     **G01S 19/44** $^{(2010.01)}$

(52) Cooperative Patent Classification (CPC):
**G01S 19/073;** G01S 19/44

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Trimble Inc.**
**Westminster, CO 80021 (US)**

(72) Inventors:
• **Chen, Xiaoming**
  **Höhenkirchen-Siegertsbrunn (DE)**
• **Rodriguez Solano, Carlos Javier**
  **Höhenkirchen-Siegertsbrunn (DE)**
• **Reussner, Nico**
  **Höhenkirchen-Siegertsbrunn (DE)**
• **Rexer, Moritz**
  **Höhenkirchen-Siegertsbrunn (DE)**

(74) Representative: **Hoffmann Eitle**
**Patent- und Rechtsanwälte PartmbB**
**Arabellastraße 30**
**81925 München (DE)**

(54) **METHODS AND SYSTEMS FOR PROVIDING REGIONAL CORRECTION INFORMATION FOR POSITIONING PURPOSES**

(57)     The invention relates to methods for providing information for use by a navigation satellite system (NSS) receiver and/or processing entity receiving data therefrom, for positioning purposes. In one embodiment, satellite orbit information and satellite clock error information applicable over a wide area and to epoch $t_1$ is obtained (s10) for each of a plurality of NSS satellites. Ambiguities in the carrier phase of NSS signals received at epoch $t_1$ at narrow area reference stations are estimated (s20). For each satellite, the satellite orbit and satellite clock error at epoch $t_2$ are predicted (s30). A residual error for modelling errors having a common or substantially common line-of-sight dependency is estimated (s40a). The residual error is added (s50a) to the predicted satellite clock error to form a redefined satellite clock error. The invention also relates to variants of the above-mentioned method, and to systems, computer programs, and computer program products.

s10 — obtaining, for each of a plurality of NSS satellites, satellite orbit information and satellite clock error information applicable over a wide area and to epoch $t_1$

s20 — for each of the narrow area reference stations and for epoch $t_1$, estimating ambiguities in the carrier phase of NSS signals received at epoch $t_1$ at the narrow area reference station

s30 — predicting, for each of the NSS satellites, the satellite orbit and satellite clock error at epoch $t_2$, wherein $t_2 = t_1 + d$

s40a — for each of the NSS satellites and for epoch $t_2$, estimating a residual error for modelling errors having a common or substantially common line-of-sight dependency in the narrow area

s50a — adding, for each of the NSS satellites, the residual error estimated for epoch $t_2$ to the predicted satellite clock error, the result being the "redefined satellite clock error"

s60 — broadcasting, for each of the NSS satellites, the redefined satellite clock error and the obtained satellite orbit information applicable over the wide area

Fig. 1

EP 4 546 014 A1

**Description**

**[Field of technology]**

The invention relates to methods, systems, and computer programs for providing correction information for positioning purposes. The fields of application of the methods, systems, devices, and computer programs include, but are not limited to, geospatial positioning, navigation, highly automated driving, autonomous driving, mapmaking, land surveying, civil engineering, construction, agriculture, disaster prevention and relief, and scientific research.

**[Background]**

Navigation satellite systems (NSS) include both global navigation satellite systems (GNSS) and regional navigation satellite systems (RNSS), such as the Global Positioning System (GPS) (United States), GLONASS (Russia), Galileo (Europe), BDS (China), QZSS (Japan), and the Indian Regional Navigational Satellite System (IRNSS, also referred to as NAVIC) (systems in use or in development). An NSS typically uses a plurality of satellites orbiting the Earth. The plurality of satellites forms a constellation of satellites. An NSS receiver detects a code modulated on an electromagnetic signal broadcast by a satellite. The code is also called a ranging code. Code detection includes comparing the bit sequence modulated on the broadcasted signal with a receiver-side version of the code to be detected. Based on the detection of the time of arrival of the code for each of a series of the satellites, the NSS receiver estimates its position. Positioning includes, but is not limited to, geolocation, i.e. the positioning on the surface of the Earth.

An overview of GPS, GLONASS, and Galileo is provided for example in sections 9, 10, and 11 of ref. [1] (a list of references is provided at the end of the present description, after a list of abbreviations and acronyms).

Positioning using NSS signal codes provides a limited accuracy, notably due to the distortion the code is subject to upon transmission through the atmosphere. For instance, the GPS includes the transmission of a coarse/acquisition (C/A) code at about 1575 MHz, the so-called L1 frequency. This code is freely available to the public, whereas the Precise (P) code is reserved for military applications. The accuracy of code-based positioning using the GPS C/A code is approximately 15 meters, when considering both the electronic uncertainty associated with the detection of the C/A code (electronic detection of the time of arrival of the pseudorandom code) and other errors including those caused by ionospheric and tropospheric effects, ephemeris errors, satellite clock errors, and multipath propagation.

The carrier signals transmitted by the NSS satellites can also be tracked to provide an alternative, or complementary, means of determining the range, or change in range between the receiver and satellite. Carrier phase measurements from multiple NSS satellites facilitate estimation of the position of the NSS receiver.

The approach based on carrier phase measurements has the potential to provide much greater position precision, i.e. down to centimetre-level or even millimetre-level precision, compared to the code-based approach. The reason may be intuitively understood as follows. The code, such as the GPS C/A code on the L1 band, has an effective chip length that is much longer than one cycle of the carrier on which the code is modulated. Code and carrier phase measurements have precisions that are roughly the same fraction of the respective chip length or wavelength. The position resolution may therefore be viewed as greater for carrier phase detection than for code detection.

However, in the process of estimating the position based on carrier phase measurements, the carrier phases are ambiguous by an unknown number of cycles. The fractional phase of a received signal can be determined but the additional number of cycles required to determine the satellite's range cannot be directly determined in an unambiguous manner. This is the so-called "integer ambiguity problem", "integer ambiguity resolution problem", or "phase ambiguity resolution problem", which may be solved to yield the so-called fixed-ambiguity solution (sometimes referred to simply as the fixed solution).

GNSS observation equations for code observations and for carrier phase observations are for instance provided in ref. [1], section 5. An introduction to the GNSS integer ambiguity resolution problem, and its conventional solutions, is provided in ref. [1], section 7.2. The person skilled in the art will recognize that the same or similar principles apply to RNSS.

The main GNSS observables are therefore the carrier phase and code (pseudorange), the former being generally much more precise than the latter, but ambiguous. These observables enable a user to obtain the geometric distance from the receiver to the satellite. With known satellite position and satellite clock error, the receiver position and receiver clock error can be estimated.

As mentioned above, the GPS includes the transmission of a C/A code at about 1575 MHz, the so-called L1 frequency. More precisely, each GPS satellite transmits continuously using two radio frequencies in the L-band, referred to as L1 and L2, at respective frequencies of 1575.42 MHz and 1227.60 MHz. With the ongoing modernization of the GPS, signals on a third L5 frequency are becoming available. Among the two signals transmitted on L1, one is for civil users and the other is for users authorized by the United States Department of Defense (DoD). Signals are also transmitted on L2, for civil users and DoD-authorized users. Each GPS signal at the L1 and L2 frequencies is modulated with a pseudo-random noise (PRN) code, and optionally with satellite navigation data. When GNSS satellites broadcast signals that do not contain navigation data, these signals are sometimes termed "pilot" signals, or "data-free" signals. In relation to GPS, two different PRN codes are transmitted by each satellite: a C/A code and a P code which is encrypted for DoD-authorized users to become a Y code. Each C/A code is a unique sequence of 1023 bits, which is repeated each millisecond. Other NSS systems also have satellites transmitting multiple signals on multiple carrier frequencies.

A global network of NSS reference stations may also be used to compute and provide correction information to NSS receivers (users) in the field. The correction information may for example comprise precise information about satellite orbits, satellite clocks, and ionosphere- and troposphere-induced delays or errors. The correction information provided to the NSS receivers may enable those to resolve the integer ambiguities in the carrier phases so as to yield a fixed solution. These systems are known in the art as precise point positioning (PPP) or precise point positioning real-time kinematic (PPP-RTK) systems or services.

There is a constant need for improving positioning or similar systems making use of NSS observables and, in particular, systems involving the transmission of correction information to NSS receivers and the like.

**[Summary]**

The present invention aims at addressing the above-mentioned need. The invention includes methods, systems, computer programs, computer program products, and storage mediums as defined in the independent claims. Particular embodiments are defined in the dependent claims.

In one embodiment, a method aims at providing information suitable for use by (i) a NSS receiver, and/or (ii) a processing entity capable of receiving data from the NSS receiver, in contributing to computing a positioning solution based on NSS signals received by the NSS receiver. The method comprises the following operations. Satellite orbit information and satellite clock error information is obtained for each of a plurality of NSS satellites. The satellite orbit information and satellite clock error information is applicable over the entire surface of the Earth or over a first region of the surface of the Earth, the entire surface of the Earth or the first region, whichever is applicable, being hereinafter referred to as "wide area". Furthermore, the satellite orbit information and satellite clock error information is applicable to an epoch $t_1$. For each of a plurality of reference stations, hereinafter referred to "narrow area reference stations", and for epoch $t_1$, ambiguities in the carrier phase of NSS signals received at epoch $t_1$ at the narrow area reference station are estimated. The narrow area reference stations are spread over a second region of the surface of the Earth, hereinafter referred to as "narrow area". Furthermore, the narrow area forms a part of, or at least overlaps with, the wide area and has a size being smaller than, or equal to, $n$ times the size of the wide area, wherein n is a number smaller than, or equal to, 0.34. For each of the NSS satellites, a satellite orbit and a satellite clock error at an epoch $t_2$ are predicted, wherein epoch $t_2$ is equal to epoch $t_1$ plus d, and d is a time delay that is larger than zero. For each of the NSS satellites, for epoch $t_2$, and for the narrow area, a residual error for modelling errors having a common or substantially common line-of-sight dependency is estimated using (i) NSS signals received at epoch $t_2$ at the narrow area reference stations; (ii) the predicted satellite orbit and satellite clock error at epoch $t_2$; (iii) if there is no cycle slip between epoch $t_1$ and epoch $t_2$, the estimated ambiguities in the carrier phase of NSS signals received at epoch $t_1$ at the narrow area reference stations; and (iv) an estimated troposphere delay at each of the narrow area reference stations. For each of the NSS satellites, the residual error estimated for epoch $t_2$ is added to the predicted satellite clock error, the result of the addition being hereinafter referred to as "redefined satellite clock error". Then, for each of the NSS satellites, the redefined satellite clock error and the obtained satellite orbit information are broadcast.

In another embodiment, a method aims at providing information suitable for use by (i) a NSS receiver, and/or (ii) a processing entity capable of receiving data from the NSS receiver, in contributing to computing a positioning solution based on NSS signals received by the NSS receiver. The method comprises the following operations. Satellite orbit information and satellite clock error information is obtained for each of a plurality of NSS satellites. The satellite orbit information and satellite clock error information is applicable over the entire surface of the Earth or over a first region of the surface of the Earth, the entire surface of the Earth or the first region, whichever is applicable, being hereinafter referred to as "wide area". Furthermore, the satellite orbit information and satellite clock error information is applicable to an epoch $t_1$. For each of a plurality of reference stations, hereinafter referred to "narrow area reference stations", and for epoch $t_1$, ambiguities in the carrier phase of NSS signals received at epoch $t_1$ at the narrow area reference station are estimated. The narrow area reference stations are spread over a second region of the surface of the Earth, hereinafter referred to as "narrow area". Furthermore, the narrow area forms a part of, or at least overlaps with, the wide area and has a size being smaller than, or equal to, $n$ times the size of the wide area, wherein n is a number smaller than, or equal to, 0.34. For each of the NSS satellites, for epoch $t_1$, and for the narrow area, a residual error for modelling errors having a common or substantially common line-of-sight dependency is estimated using (i) NSS signals received at epoch $t_1$ at the narrow area reference stations; (ii) the obtained satellite orbit information and satellite clock error information applicable at epoch $t_1$; (iii) the estimated ambiguities in the carrier phase of NSS signals received at epoch $t_1$ at the narrow area reference stations; and (iv) an estimated troposphere delay at each of the narrow area reference stations. For each of the NSS satellites, the residual error estimated for epoch $t_1$ is added to a satellite clock error that is based on the obtained satellite clock error information, the result of the addition being hereinafter referred to as "redefined satellite clock error". Then, for each of the NSS satellites, the redefined satellite clock error and the obtained satellite orbit information are broadcast.

The methods in the above-described embodiments create the ability to provide and broadcast information incorporating regional, per-satellite, residual error information accounting for errors that have a common or at least substantially common line-of-sight dependency. The broadcast information may be used by NSS receivers or NSS receiver systems in the narrow area for positioning purposes.

The invention also relates, in some embodiments, to systems configured to carry out any one of the above-described methods.

In some embodiments, computer programs, computer program products and/or storage media for storing such computer programs are provided. Such computer programs comprise computer-executable instructions configured for carrying out, when executed on a computer, or when executed on a set of computers such as a set of computers embedded in, or otherwise part of, a set of apparatuses or devices, any one of the above-described methods.

## [Brief description of the drawings]

Embodiments of the present invention shall now be described, in conjunction with the appended drawings in which:

Fig. 1 is a flowchart of a method in one embodiment of the invention;
Fig. 2a schematically illustrates the Earth, a satellite, and a plurality of reference stations visible to the satellite in a wide area (in this case for example a global area);
Fig. 2b schematically illustrates the Earth, a satellite, and a plurality of reference stations visible to the satellite in a narrow area (in this case for example an area corresponding or approximately corresponding to Germany);
Fig. 2c schematically illustrates the Earth, a satellite, and a narrow area, to illustrate and explain the concept of residual error;
Fig. 3 is a graph comparing the age over time of different NSS-related correction messages, to illustrate the benefit of some embodiments of the invention;
Fig. 4 is a flowchart of a method in another embodiment of the invention;
Figs. 5 and 6 are flowcharts of methods in two embodiments of the invention, which further comprise, compared to the methods illustrated in Figs. 1 and 4 respectively, broadcasting a quality indicator;
Fig. 7 schematically illustrates a system in one embodiment of the invention; and
Figs. 8 and 9 schematically illustrate systems in two embodiments of the invention.

## [Detailed description]

The present invention shall now be described in conjunction with specific embodiments. These serve to provide the skilled person with a better understanding but are not intended to in any way restrict the scope of the invention, which is defined by the appended claims. In particular, the embodiments described throughout the description can be combined to form further embodiments to the extent that they are not mutually exclusive.

Throughout the following description, the abbreviation "GNSS" is sometimes used. The invention is, however, not limited to global navigation satellite systems (GNSS) but also applies to regional navigation satellite systems (RNSS). Thus, it is to be understood that each occurrence of "GNSS" in the following can be replaced with "RNSS" to form additional embodiments.

In the art, the term "observables" is often used to refer to structures of an NSS signal from which observations or measurements can be made (PRN-code, carrier phase, Doppler, SNR) (see e.g. ref. [2]: "The word observable is used throughout GPS literature to indicate the signals whose measurement yields the range or distance between the satellite and the receiver."). However, in common usage, and in the present document, the term "observable" (also referred to as "NSS observable") is also interchangeably used to refer to the observation itself, such that, for example, "carrier phase observable" has the same meaning as "carrier phase observation". Further, when the present document describes that an NSS signal is observed, this means that at least an observation (measurement) of at least an observable of the NSS signal is made.

When the term "real-time" is used in the present document, it means that an action is performed (e.g., data is processed or transmitted, results are computed) as soon as the required information for that action is available. Thus, certain latency exists, which depends on various aspects depending on the involved component(s) of the system.

When the verb "broadcast" (and "broadcasting", etc.) is used, this also covers embodiments where the transmission is a form of multicasting.

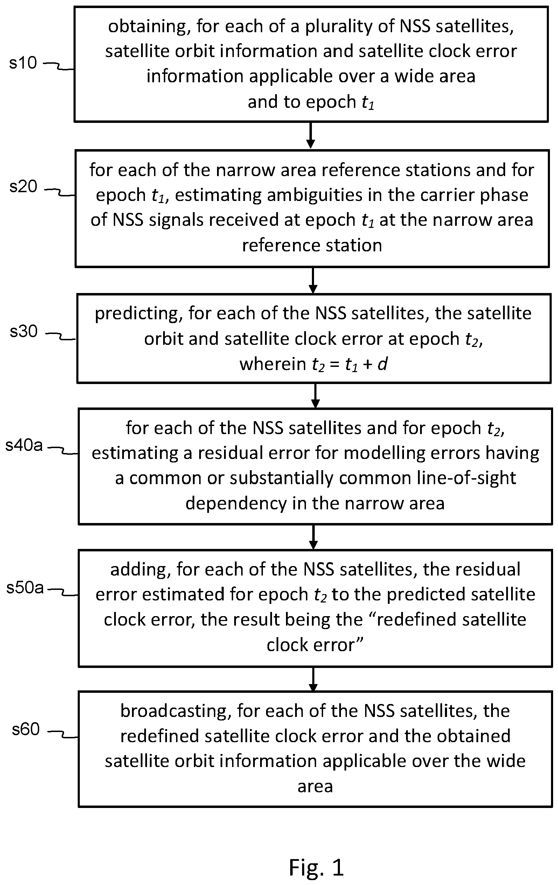

Fig. 1 is a flowchart of a method in one embodiment of the invention, for providing information suitable for use by a NSS receiver and/or a processing entity capable of receiving data from the NSS receiver. The information provided is suitable to be used to contribute to the computation of a positioning solution based on NSS signals received by the NSS receiver from a plurality of NSS satellites. The provided information may also be called "correction information".

The method of Fig. 1 may be carried out by one or a plurality of computers and/or servers, or more generally by any number of processing entities implemented in hardware, firmware, and/or software. In one embodiment, the method is partially or fully carried out in the cloud, i.e. by any number of processing entities in the cloud.

The term "providing" means here sending the information, i.e. transmitting, broadcasting, or otherwise making the information available, to one or more NSS receivers and/or one or more processing entities capable of receiving data from one or some of the NSS receiver(s).

In step s10, satellite orbit information and satellite clock error information is obtained for each of a plurality of NSS satellites. The satellite orbit information and satellite clock error information is applicable over the entire surface of the Earth or, alternatively, over a first region of the surface of the Earth. The entire surface of the Earth or the first region, whichever is applicable, is here referred to as "wide area". Furthermore, the satellite orbit information and satellite clock error information is applicable to an epoch $t_1$.

Satellite orbit information for a given NSS satellite means here information about the satellite's orbit position or at least information usable for computing an estimate of the satellite's orbit position at a given point in time.

Satellite clock error information for a given NSS satellite means here, for a GPS satellite, a time difference to the system time of GPS, which may be a difference caused by the satellite oscillator not being synchronised to the reference time (GPS time). A person skilled in the art would understand that, for other satellites than GPS satellites, the expression "satellite clock error information" has a corresponding meaning, considering the system time of the GNSS under consideration (e.g. GLONASS time, Galileo system time, etc.). The satellite clock error information may for example include a satellite clock bias.

The expressions "information is applicable" and "error information is applicable" (or the like) over a given region and to a given epoch means here that the information is considered to be valid over the region under consideration at the epoch under consideration.

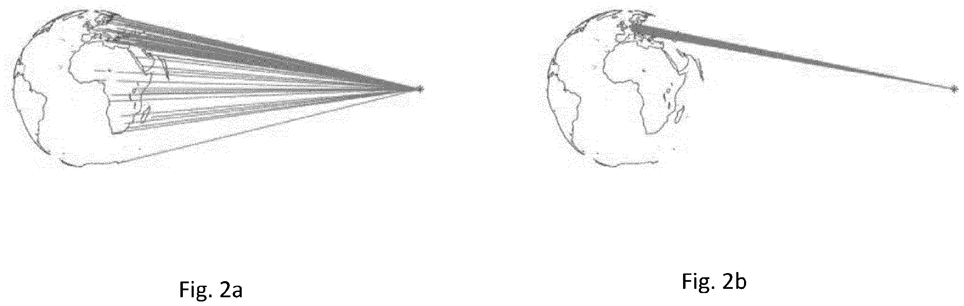

In one embodiment, obtaining s10, for each of the NSS satellites (i.e., for each of the above-referred plurality of NSS satellites), the satellite orbit information applicable to epoch $t_1$ comprises one of: (a) estimating the satellite orbit information based on NSS signals received at a plurality of reference stations spread over the wide area, the plurality of reference stations being here referred to as "wide area reference stations" or collectively as "wide area reference stations network" (estimating the satellite orbit information based on NSS signals received at a plurality of reference stations may for example be done as described in ref. [11]; and for phase-levelled satellite clock estimation, see ref. [12]); and (b) receiving the satellite orbit information, for example on a PPP correction stream. In that context, Fig. 2a schematically illustrates the Earth, a NSS satellite (on the right-hand side), a wide area reference stations network (in this case for example a global network), and the lines of sight between the satellite and each wide area reference station.

In one embodiment, obtaining s10, for each of the NSS satellites, the satellite clock error information applicable to epoch $t_1$ comprises one of: (c) estimating the satellite clock error information based on NSS signals received at the wide area reference stations (estimating the satellite clock error information based on NSS signals received at a plurality of reference stations may for example be done as described in ref. [12]); and (d) receiving the satellite clock error information, for example on a PPP correction stream.

These embodiments relating to how the satellite orbit information and satellite clock error information may be obtained for each of the NSS satellites may be combined. That is, options (a) and (c) may be combined so that both the satellite orbit information and satellite clock error information applicable to epoch $t_1$ are estimated based on NSS signals received at the wide area reference stations. Other combinations are possible, however, such as combining options (b) and (c) or combining options (b) and (d).

In some embodiments, information, such as satellite orbit information, may be received at a certain frequency (e.g. every 20 or 30 seconds) and then nudged (i.e., extrapolated or interpolated) at a higher frequency (e.g. every 2 or 4 seconds). Furthermore, the update rate of satellite orbit information and satellite clock error information may be different. For example, the orbit correction update rate may be 20 or 30 seconds, whereas the clock update rate is 2 or 4 seconds.

How the satellite orbit information and satellite clock error information applicable to epoch $t_1$ is obtained s10 for each of the NSS satellites may also depend on the NSS satellite, instead of being obtained in the same manner for all satellites. That is, for example, for a first group of NSS satellites, the satellite orbit information applicable to epoch $t_1$ may be estimated whereas, for a second group of NSS satellites, the satellite orbit information applicable to epoch $t_1$ may be received from an external provider. For example, the first group of NSS satellites may comprise one satellite constellation (e.g. GPS satellites) and the second group may comprise another satellite constellation (e.g. Galileo satellites).

In step s20, for each of a plurality of reference stations, here referred to "narrow area reference stations" or collectively as "narrow area reference stations network", and for epoch $t_1$, integer ambiguities in the carrier phase of NSS signals received at epoch $t_1$ at the narrow area reference station are estimated, and, more specifically, may be resolved. The narrow area reference stations are spread over a second region of the surface of the Earth, here referred to as "narrow area". The narrow area reference stations constitute a distributed network of reference stations configured for communicating with a control center (which may for example, but not necessarily, be collocated with one of the reference stations) or the like, to estimate ambiguities in the carrier phase of NSS signals received at the narrow area reference stations. The narrow area forms a part of, or at least overlaps with, the above-referred wide area and has a size being smaller than, or equal to, $n$ times the size of the wide area, wherein n is a number smaller than, or equal to, 0.34. For example, the narrow area may, in one embodiment, roughly correspond to a country such as Germany, France, Spain, or the U.S., or to a U.S. state, or to a continent such as Europe. In one embodiment, n is a number selected within the range from 0.0002 to 0.34, preferably a number selected within the range from 0.0004 to 0.1.

In one embodiment, the narrow area reference stations comprise at least three reference stations. Preferably, the narrow area reference stations comprise at least 10 reference stations. Most preferably, the narrow area reference stations comprise at least 100 reference stations, such as 150, 200, 250, or more reference stations. In one embodiment, there are from 1 to 15 narrow area reference stations per 10000 km$^2$ (square kilometres) in the narrow area. In one embodiment, some or all narrow area reference stations are also wide area reference stations, i.e. the group of narrow area reference stations and the group of wide area reference stations are not necessarily mutually exclusive. Fig. 2b schematically illustrates the Earth, a NSS satellite (on the right-hand side), a narrow area reference stations network (covering Germany), and the lines of sight between the satellite and each narrow area reference station.

The ambiguities in the carrier phase of the NSS signals received at epoch $t_1$ at each of the narrow area reference stations are estimated s20, and optionally resolved, based on the satellite orbit information and satellite clock error information obtained in step s10 for epoch $t_1$, which is applicable over the wide area. The ambiguity estimation may for example be carried out as described in ref. [3], paragraphs [0035] to [0037], [0097], and [0098] (i.e. see step s30 in ref. [3]) or in ref. [13].

In step s30, for each of the NSS satellites, the satellite orbit and satellite clock error at an epoch $t_2$ are predicted, wherein epoch $t_2$ is equal to epoch $t_1$ plus d, and d is a time delay, i.e. a period of time, that is larger than zero. That is, $t_2 = t_1 + d$, and $d > 0$. The satellite orbit and satellite clock error are predicted to, i.e. propagated to, epoch $t_2$ based on the satellite orbit information and satellite clock error information obtained in step s10 for epoch $t_1$. In one embodiment, d is a number selected within the range from 0.2 to 20 seconds, such as for example 0.5, 1, 2, or 5 seconds.

For predicting the satellite orbit, comprising information about the satellite position, the method described in ref. [7] may for example be used in order to propagate satellite orbit to epoch $t_2$ with satellite position obtained at epoch $t_1$ and earlier epoch $t_0$.

For predicting the satellite clock error, a linear filter may for example be used to predict the satellite clock error at epoch $t_2$ with the satellite clock rate estimated by the linear filter with historic satellite clock error (say at epochs $t_1$, $t_0$, $t_{-1}$, $t_{-2}$, etc.) and the clock error at epoch $t_0$, as follows.

$$SatelliteClock(t_2) = SatelliteClock(t_1) + SatelliteClockRate * d$$

The person skilled in the art would recognize that there are other ways to predict, i.e. propagate, the satellite orbit and satellite clock error, however.

In one embodiment, epoch $t_2$ is, at the time of predicting s30 the satellite orbit and satellite clock error, the latest epoch. By "latest epoch", it is here meant the latest epoch for which the narrow area reference stations network controller (or the like) has received data from most narrow area reference stations, wherein the term "most" means here more than a predetermined minimum number or proportion, such as more than half or more than two-thirds, of the narrow area reference stations. However, the invention is not limited thereto. Instead, it is also possible to predict, for each of the NSS satellites, the satellite orbit and satellite clock error at an epoch preceding the latest epoch, i.e. epoch $t_2$ may be, at the time of predicting s30 the satellite orbit and satellite clock error, an epoch preceding the latest epoch.

In one embodiment, epoch $t_1$ is the latest epoch at which most NSS signals from the wide area reference stations network are available at the processing element(s) in charge of carrying out steps s20 and s30, and epoch $t_2$ is the latest epoch at which most NSS signals from the narrow area reference stations network are available at the processing element(s) in charge of carrying out steps s20 and s30, the term "most" meaning here more than a predetermined minimum number or proportion, such as more than half or more than two-thirds. In this embodiment, epoch $t_1$ may be called the latest "synchronised epoch".

In step s40a, for each of the NSS satellites and for epoch $t_2$, a residual error for modelling errors having a common or substantially common line-of-sight dependency is estimated, for the narrow area, using: (i) NSS signals received at epoch $t_2$ at the narrow area reference stations; (ii) the predicted satellite orbit and satellite clock error at epoch $t_2$ (i.e., the satellite orbit and satellite clock error predicted in step s30); (iii) if there is no cycle slip between epoch $t_1$ and epoch $t_2$ (this means that item (iii) is optional in that, if there is a cycle slip, the observation is not used to compute the residual error), the estimated ambiguities in the carrier phase of NSS signals received at epoch $t_1$ at the narrow area reference stations (i.e., the ambiguities estimated in step s20); and (iv) an estimated troposphere delay at each of the narrow area reference stations at epoch $t_1$. The troposphere delay per reference station may be estimated for example as described in refs. [4] (paragraphs [0101] to [0109]), [14], or [15]. The estimation s40a may be performed based on equations (1) to (3).

By "errors having a common or substantially common line-of-sight dependency", it is meant here errors for which the line-of-sight (i.e., from the respective reference station to NSS satellite under consideration) dependency is similar. In one embodiment, the residual error for modelling errors having a common or substantially common line-of-sight dependency is a residual error modelling at least a residual satellite orbit error, a satellite clock error, and a residual satellite APC variation error. In one embodiment, the residual error for modelling errors having a common or substantially common line-of-sight dependency is a lumped sum of at least a residual satellite orbit error, a satellite clock error, and a residual satellite APC variation error.

As mentioned above, the residual error estimated in step s40a is for modelling errors having a common or substantially common line-of-sight dependency. This may be further explained as follows.

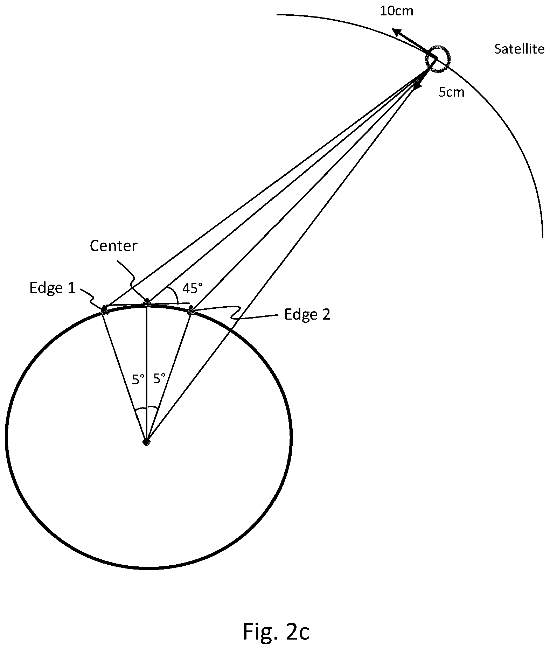

The residual error of satellite clock error is common to all stations within the narrow area. The following simplified example illustrates how satellite orbit error maps to line of sight with the following assumptions and as schematically illustrated in Fig. 2c: (i) the Earth is a sphere with a radius of 6370 km, (ii) the narrow area is a spheric cap with 5 degrees radius, (iii) the satellite orbits in a circular orbit with a radius of 26000 km, (iv) the satellite elevation angle at the center point of the narrow area is 45 degrees, and (v) the radial orbit error is 5 cm and the along-track orbit error is 10 cm.

Table 1. Line-of-sight (LOS) error caused by orbit error.

|  | LOS error caused by radial orbit error [ cm ] | LOS error caused by along-track error [ cm ] |
| --- | --- | --- |
| Edge 1 | 4.909 | 1.904 |
| Center | 4.924 | 1.732 |
| Edge 2 | 4.941 | 1.537 |

Table 1 summarizes the line-of-sight error caused by radial and along-track orbit error for Edge 1, Edge 2, and Center points. On average, 4.925 cm of 5 cm radial orbit error and 1.724 cm of 10 cm along-track orbit error are common to the line of sight.

From the satellite point of view, all stations in the narrow area are lying in the roughly the same direction (the nadir angle of Edge 1, Center, and Edge 2 are 10.96 degrees, 9.98 degrees and 8.84 degrees respectively; the difference between Edge 1 and Edge 2 is 2.12 degrees), so that the residual phase center variation is largely the same for all stations in the narrow area.

When satellite orbit and satellite clocks are estimated with data from a global network (i.e., from the wide area reference stations network), the solution can be considered as optimal globally but not necessarily the best for a certain region. There can be a few centimeters orbit/clock residual error left for a certain region that can be absorbed by the redefined satellite clock error. In other words, while the satellite orbit computed with the global network (or, more generally, with the wide area reference stations network) may have an overall RMS of 1 cm, there may be regions for which the orbit error is 0.5 cm and some other regions for which the orbit error is 3 cm. For the narrow area, the orbit error in that region may be 3 cm. With the regional network data (i.e., from the narrow area reference stations network), a residual error can be computed with respect to the satellite orbit and clock estimated with the global network. As the regional network size is relatively small, the residual error can be lumped together in a single correction per satellite.

In step s50a, for each of the NSS satellites, the residual error estimated for epoch $t_2$ (from step s40a, i.e. the estimated residual error from the narrow area reference stations network) is added to the predicted satellite clock error (from step s30), the result of the addition being here referred to as "redefined satellite clock error". The redefined satellite clock error is associated with a time stamp $t_2$. That is, the residual error estimated for epoch $t_2$ is based on data from the narrow area reference stations network whereas the predicted satellite clock error is based on data from the wide area reference stations network.

In step s60, for each of the NSS satellites, the redefined satellite clock error and the obtained satellite orbit information are broadcast, such as broadcast over the narrow area to NSS receiver(s) and/or NSS receiver system(s). When broadcast, the redefined satellite clock error is transmitted together with its new time stamp $t_2$.

The broadcasting s60 of the redefined satellite clock error and the obtained satellite orbit information may for example be carried out in the form of data packets, such as IP packets, through, for example, any one of, or a combination of, a local area network (LAN), the Internet, a cellular network, and a suitable satellite link (e.g., L-Band). The person skilled in the art would, however, appreciate that other transmission protocols (e.g., HTTPS) and other forms of wired or wireless transmission may be used, such as, and without being limited to, wireless transmissions involving Bluetooth, Wi-Fi, or Li-Fi. In one embodiment, the data is transmitted as a data stream in that messages containing said data are transmitted at regular or irregular intervals through the same communication medium or channel. A plurality of parallel data streams may be used as well, for example one stream per region, i.e. a first stream providing correction information for a first region (a first narrow area), a second stream providing correction information for a second region (a second narrow area), etc.

Further, the data may be encoded and/or encrypted prior to transmission, and it may transit through any number of intermediate computers or other processing entities.

The redefined satellite clock error and the obtained satellite orbit information may be broadcast periodically or aperiodically, and the transmission frequency of the redefined satellite clock error may be the same as or may differ from that of the obtained satellite orbit information. In one embodiment, the redefined satellite clock error and the obtained satellite orbit information are sent every m second(s), wherein m is a number selected within the range from 1 to 10, preferably a number selected within the range from 1 to 5, such as for example 1, 2, or 3.

In one embodiment, the redefined satellite clock error and the obtained satellite orbit information are transmitted together with other correction information, for example as part of a correction stream (in that respect, see e.g. refs. [3] to [6]), and/or together with regional geodetic datum transformation information as described in ref. [8]. In one embodiment, the correction stream may be regionalized in that it applies to a region of the Earth's surface. For example, a country-scale correction stream, such as country-scale PPP correction stream, may be broadcast. The compactness of the redefined satellite clock error and obtained satellite orbit information lends itself well to broadcasting in a correction stream, which should typically be received as quickly as possible at the NSS receiver side.

In one embodiment, the redefined satellite clock error and the obtained satellite orbit information are transmitted over a one-way (i.e., unidirectional, broadcast-only) communication channel from the network side to the NSS receiver side, i.e. not requiring a communication channel from the NSS receiver side (back) to the network side and therefore not requiring a transmitter at the NSS receiver. This differs from virtual reference station (VRS) systems requiring the rover (i.e., a form of NSS receiver) to communicate its approximate position to the network, thus requiring a two-way communication channel. A unidirectional broadcast service is beneficial in that there is no limit to the number of concurrent users that can be served. In this embodiment, the method is independent from any single physical base station (PBS) (sometimes used in VRS systems), which may be affected by multipath issues.

The method illustrated by Fig. 1 creates the ability to provide and broadcast information (i.e., correction information) incorporating regional, per-satellite, residual error information accounting for errors that have a common or at least substantially common line-of-sight dependency. The broadcast information may be used by NSS receivers or NSS receiver systems in the narrow area for positioning purposes, offering advantages in terms of improved positioning accuracy (compared to PPP systems, thanks to improved satellite clock absorbing common line-of-sight error, as mentioned above, and thanks to reduced latency; and compared to VRS systems, thanks to the independence from any single PBS, which may be affected by multipath issues as mentioned above) and in terms of reduced convergence time (compared to PPP, thanks to improved satellite orbit and clock) and reduced latency (compared to PPP systems, because the narrow area reference stations are concentrated compared to the reference stations used to compute globally applicable corrections; furthermore, the satellite orbit information and clock error information from the wide area is delayed because the server needs time to estimate orbit and clock).

In turn, the advantage in terms of reduced latency may have an additional positive impact on the positioning accuracy since in some implementations a precise but delayed estimation thus needs to be less propagated to obtain a timely estimation. This can be further explained as follows. The latency of the corrections can be reduced by computing them at $t_2 = t_1 + d$. While $t_2$ is closer to real-time, it is not real-time. The rover still has to propagate the satellite orbits and satellite clocks from $t_2$ to real-time. For the satellite orbits the propagation works very well (sub-millimeter error) but for the satellite clock the propagation error depends on the physical quality of the clock on-board the satellites. For example, with an H-maser (hydrogen maser) clock, propagation can be performed with a lower error over short periods of time than with a Rubidium clock.

Specifically, in the method illustrated by Fig. 1, the regional, per-satellite, residual error is regarded as a satellite clock error component in that it is used to redefine the satellite clock error. The residual error and therefore the redefined satellite clock error may absorb, i.e. may lump together, other regional errors such as, for example, satellite orbit errors and satellite antenna phase center (APC) variation errors (these errors also have a common or substantially common line-of-sight dependency). In other words, the regional, per-satellite, residual error information is incorporated in the redefined satellite clock error, so that existing NSS receivers or NSS receiver systems already configured for receiving a satellite clock error as part of a PPP correction stream do not necessarily have to be modified or otherwise re-configured to be able to benefit from the regional, per-satellite, residual correction information. The redefined satellite clock error has a direct impact on the rover positioning.

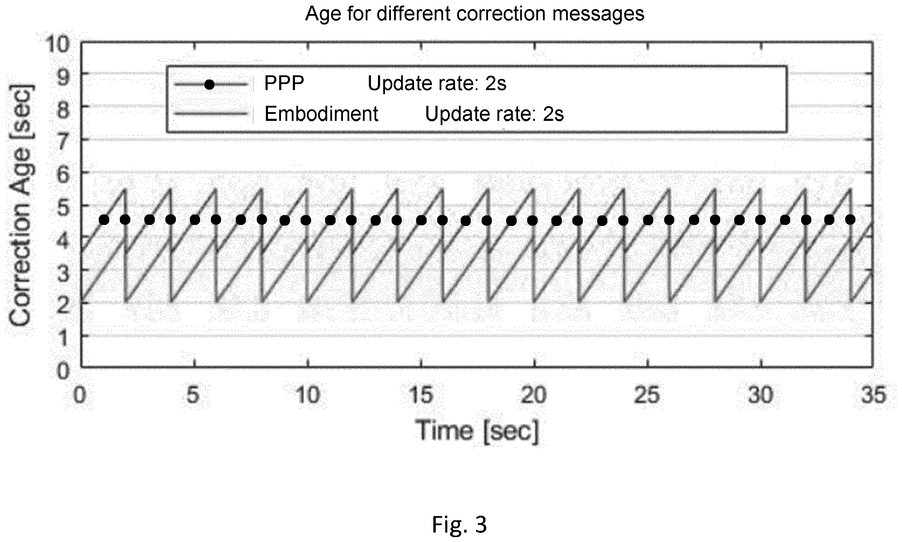

Fig. 3 is a graph comparing the ages over time of different NSS-related correction messages, in order to illustrate benefits of some embodiments of the invention. Specifically, Fig. 3 is a graph comparing the age over time of PPP correction messages generated based on a global network of reference stations (upper sawtooth curve labelled "PPP") with the age over time of correction messages based on a regional network of reference stations, i.e. a narrow area reference stations network, in one embodiment of the invention (lower sawtooth curve labelled "Embodiment"). Although both types of correction messages are issued at a rate of 2 seconds, the latency associated with the generation of PPP correction messages based on a global network of reference stations is larger than the latency associated with the generation of correction messages based on a regional network of reference stations, in one embodiment of the invention.

As mentioned above, this reduced latency has an additional positive impact on the positioning accuracy.

Table 2 further shows exemplary improvements in the orbit and clock corrections accuracy that were obtained experimentally on October 26, 2018, by using encrypted correction messages generated based on a regional network of reference stations (in accordance with an embodiment of the invention) instead of PPP correction messages generated based on a global network of reference stations. The error in the combined orbit and clock corrections were computed using the integrity residuals for the specific day, as described in ref. [21]. The correction messages account for satellite orbit errors and satellite clock errors, they were formatted according to the message format described in ref. [6], they are delayed as illustrated in Fig. 3, and the values in the second and third columns of Table 2 are the residual RMS at the latest epoch.

Table 2. Exemplary improvements in orbit and clock corrections accuracy.

|  | PPP correction messages generated based on a global network of reference stations | Correction messages (in one embodiment of the invention) generated based on a regional network of reference stations | Improvement |
|---|---|---|---|
| GPS | 8.93 mm | 7.90 mm | 11.6 % |
| GLONASS | 12.98 mm | 10.71 mm | 17.4 % |
| Galileo | 7.46 mm | 6.36 mm | 14.7 % |

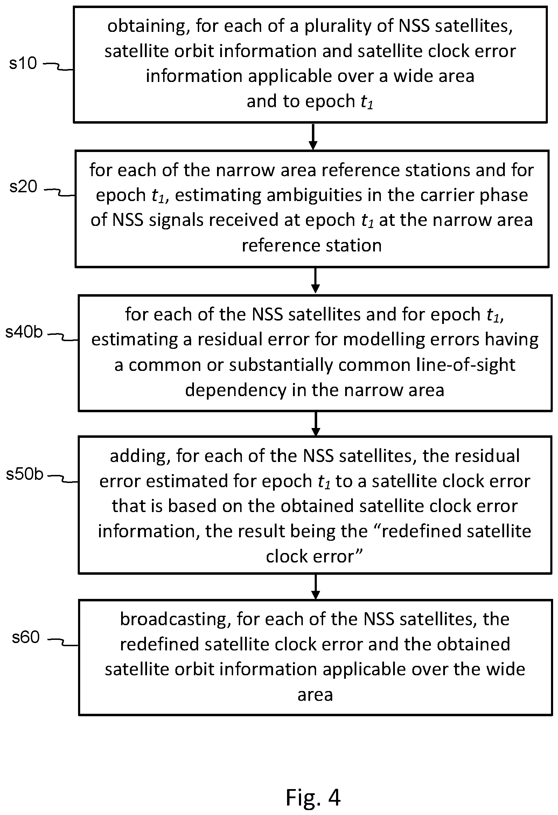

Fig. 4 is a flowchart of a method in another embodiment of the invention, also for providing information suitable for use by a NSS receiver and/or a processing entity capable of receiving data from the NSS receiver. The method of Fig. 4 differs from the method of Fig. 1 in that time delay d is equal to 0, so that epoch $t_1$ is equal to epoch $t_2$, i.e. $t_1 = t_2$. This means that, in the method of Fig. 4, no step s30 of predicting the satellite orbit and satellite clock error at epoch $t_2$ is necessary. That step can be skipped. Further, steps s40a and s50a as described with reference to Fig. 1 are respectively replaced in the method of Fig. 4 with steps s40b and s50b described below. Steps s10, s20, and s60 are the same as described with reference to Fig. 1 and will therefore not be described again for Fig. 4 in the following.

Specifically, in step s40b, for each of the NSS satellites and for epoch $t_1$, a residual error for modelling errors having a common or substantially common line-of-sight dependency is estimated, for the narrow area, using: (i) NSS signals received at epoch $t_1$ at the narrow area reference stations; (ii) the obtained satellite orbit information and satellite clock error information at epoch $t_1$ (i.e., the satellite orbit information and satellite clock error information obtained in step s10); (iii) the estimated ambiguities in the carrier phase of NSS signals received at epoch $t_1$ at the narrow area reference stations (i.e., the ambiguities estimated in step s20); and (iv) an estimated troposphere delay at each of the narrow area reference stations at epoch $t_1$. As already mentioned in relation to step s40a, the troposphere delay per reference station may be estimated for example as described in refs. [4] (paragraphs [0101] to [0109]), [14], or [15]. The estimation s40a may be performed based on equations (1) to (3).

In step s50b, for each of the NSS satellites, the residual error estimated for epoch $t_1$ is added to a satellite clock error that is based on (i.e., extracted or derived from) the obtained satellite clock error information, the result of the addition being the "redefined satellite clock error".

While it may be preferable under certain circumstances to generate the redefined satellite clock error at epoch $t_2$ to reduce the latency of the corrections by $d$ (as discussed with reference to Fig. 1), a redefined satellite clock error at epoch $t_1$ still has the advantage of reducing the line-of-sight errors with respect to the satellite clock error that is based on the satellite clock error information obtained based on the wide area reference stations network.

Apart from these differences between steps s40a and s40b and between steps s50a and s50b and the absence of step s30 in the method of Fig. 4, all the considerations discussed above in relation to Fig. 1 apply mutatis mutandis to the embodiment illustrated in Fig. 4.

In some embodiments, any one of the above methods described with reference to Figs. 1 and 4 further comprises obtaining, for each of a plurality of NSS satellites, at least one satellite signal bias that is useful to resolve ambiguities. The satellite signal bias(es) may comprise at least one of:

- a phase bias (i.e., a satellite phase bias, or satellite phase combination bias) - For example, ionospheric free phase biases may be used to resolve ambiguities, as can be seen for example from section "B. Further embodiments" below. If L1 and L2 phase biases are available, ionospheric free phase bias can be computed from L1 and L2 phase bias. -;
- a code bias (i.e., a satellite code bias, or satellite code combination bias) - Code combination biases, i.e. differential code bias (DCB), may be useful to compute ionospheric delay with code observations. -; and
- a code phase bias (i.e., a satellite code phase bias).

The satellite signal biases or satellite bias combinations can be formed in many different ways. The purpose of using the biases is to help resolve the ambiguities. A satellite signal bias is in general a hardware bias. In case of PPP systems, some biases are helpful to fix integer ambiguities in the carrier phases, i.e. the wide lane (MW) bias (a code phase bias that is helpful to fix widelane ambiguities) (see ref. [19]). The ionospheric-free phase bias is useful to fix the narrowlane ambiguity. Such biases may be induced by the satellite's hardware design and may vary over time. Obtaining them is useful to resolve (fix) integer ambiguities in the carrier phases.

In some embodiments, in any one of the above methods described with reference to Figs. 1 and 4, the residual error (i.e., the residual error estimated in step s40a or s40b respectively) comprises at least one of: (i) a residual satellite orbit, (ii) a residual satellite clock error, and (iii) a residual satellite APC variation error. In one embodiment, the residual error (i.e., the residual error estimated in step s40a or s40b respectively) comprises a lumped sum of the residual satellite orbit, the residual satellite clock error, and the residual satellite antenna phase center variation error.

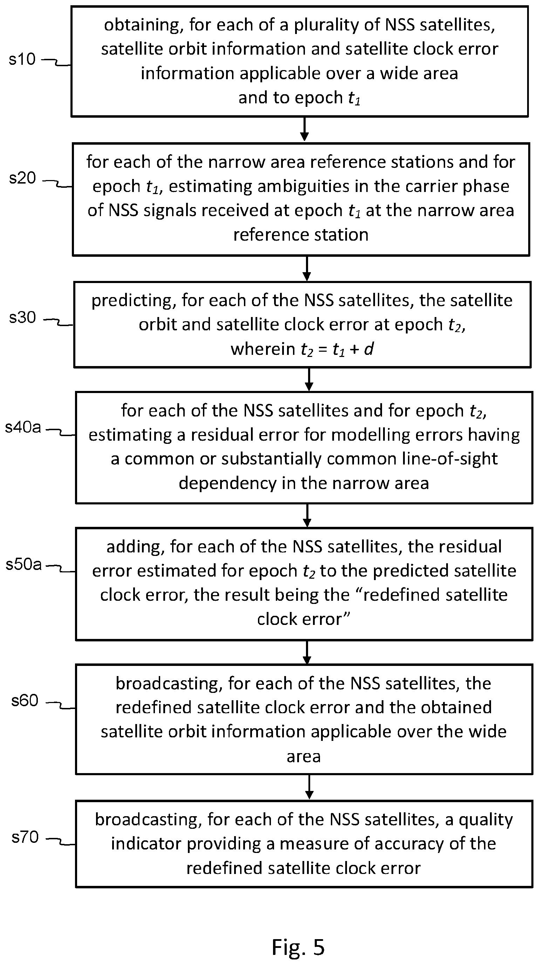

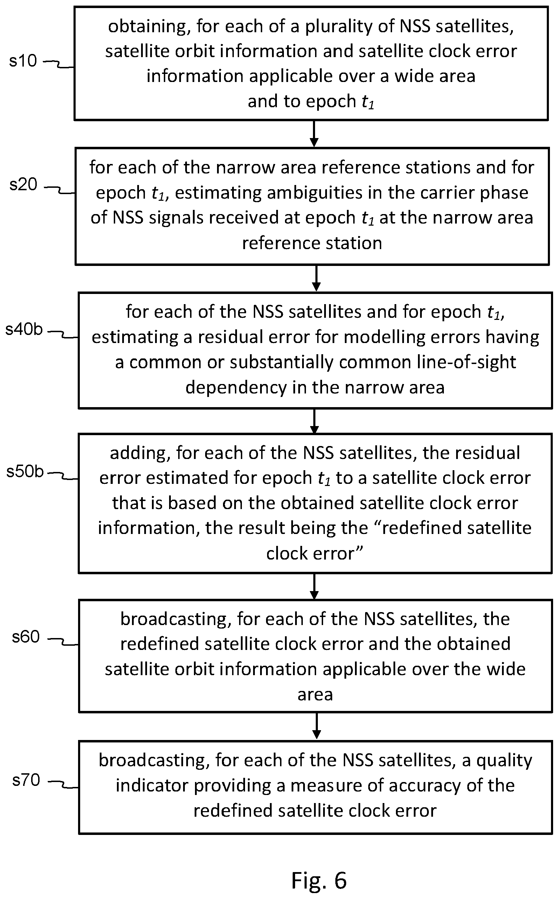

In some embodiments, any one of the above methods described with reference to Figs. 1 and 4 further comprises broadcasting s70, for each of the NSS satellites, a quality indicator (QI) providing a measure of accuracy of the redefined satellite clock error. These embodiments are illustrated by the flowcharts of Fig. 5 (expanding the method of Fig. 1) and Fig. 6 (expanding the method of Fig. 4).

In particular, instead of assigning the QI of the satellite clock error information of the wide area reference stations network to the redefined satellite clock error, a dedicated QI for the redefined satellite clock error may be provided based on covariance information from the estimator, e.g. a least-squares or a Kalman filter process. In one embodiment, the dedicated QI for the redefined satellite clock is a redefined clock error quality indicator per satellite (e.g., expressed in meter) computed based on a combination of a posteriori RMS and variance in a square sum, as follows:

$$QI_{regionalClock}(satellite) = \sqrt{RMS(satellite)^2 + \sigma^2_{clk(satellite)}}$$

where

RMS is a posteriori RMS (per satellite) of post-fit residuals of the network stations in the narrow area reference stations network, i.e. after the estimated residual clock error was applied; and

$\sigma^2_{clk}$ is the variance of estimated residual (clock) error.

This has the following advantages. The variance alone sometimes underestimates the true error. The RMS reflects the true error level better, but has been observed to not always reflect uncertainties during periods of convergence of the estimator or when the satellite is setting.

On the NSS receiver side, the information broadcast in above-described steps s60 and s70 may be received by, among many other NSS receivers or NSS receiver systems, a NSS receiver, another processing entity (which may be a system) capable of receiving data from the NSS receiver, or by the NSS receiver in conjunction with such other processing entity or system (i.e., by the NSS receiver and another processing entity or system). The NSS receiver is configured for observing NSS signals from a plurality of NSS satellites over multiple epochs. The processing entity or system may be located remotely from the NSS receiver and may, for example, receive data representing the NSS observations from the NSS receiver. The method carried out on the NSS receiver, or on the processing entity connected thereto, may for example be as described in ref. [9], paragraphs [0022] to [0053]. In particular, ref. [9], p. 6, lines 35-37 and 42-44, describes that a precise estimator running on a NSS receiver may receive delayed precise information comprising correction information including e.g. satellite orbits, satellite clock errors, GNSS (or RNSS) measurement biases, and atmospheric effects. The above-discussed redefined satellite clock errors may, in some embodiments, replace the satellite clock errors referred to in ref. [9], p. 6, lines 42-44.

A vehicle may comprise a NSS receiver as described above. The vehicle may for example be an autonomous vehicle such as a self-driving vehicle, a driverless vehicle, a robotic vehicle, a highly automated vehicle, a partially automated vehicle, an aircraft, or an unmanned aerial vehicle. Alternatively or additionally, the vehicle may for example be at least one of (the list of possibilities is not meant to be exhaustive): a motor vehicle, a car, a truck, a bus, a train, a motorcycle, a tractor, an agricultural equipment, an agricultural tractor, a combine harvester, a crop sprayer, a forestry equipment, a construction equipment, and a grader. Exemplary applications may include machine guidance, construction work, operation of unmanned aerial vehicles (UAV), also known as drones, and operation of unmanned surface vehicles/vessels (USV).

A mobile device may also comprise a NSS receiver as described above. The mobile device may be any type of communication terminal such as, for example, a mobile phone, a smartphone, a laptop, or any other type of portable device. The mobile device may be able to use or display positions.

In one aspect, the invention also relates to a system configured for carrying a method as described above (e.g.

with reference to Figs. 1, 4, 5, or 6) together with a NSS receiver system configured for receiving, for each of the NSS satellites, the redefined satellite clock error and the obtained satellite orbit information. The NSS receiver system may for example be embedded into or attached to a vehicle or mobile device as described above.

Before discussing further embodiments of the invention, let us now further briefly explain, in section A below, the context in which some embodiments of the invention have been developed and some underlying considerations, for a better understanding thereof.

A. Introduction to the context in which some embodiments of the invention have been developed and some underlying considerations

Virtual reference station (VRS) systems have been used to provide positioning with cm accuracy to geospatial, construction, and agricultural users in the last 20 years. A VRS user sends its approximate position to the VRS server, the VRS server computes geometrical and ionospheric corrections for the user location, the corrections are applied to the so-called physical base station (PBS) data, and then the corrected PBS data is sent to the user. The advantage of VRS is that the geometric and ionospheric errors are greatly reduced, the convergence time is typically a few seconds, and the positioning accuracy is better than a traditional single-base RTK solution. A disadvantage of VRS is that the positioning engine is reset when the user switches from one PBS to another; this happens when the user moves across the VRS network. Another disadvantage is that VRS requires bidirectional communication and the VRS observation is generated at the server. Depending on the communication bandwidth and CPU power of the server, the number of concurrent users is limited.

Nowadays PPP services (like Trimble Inc.'s RTX technology, as described for example in ref. [10]) provide similar accuracy as VRS to the same user groups. The accuracy is typically a few mm worse than VRS with a convergence time of a few minutes. PPP regional augmentation (like Trimble Inc.'s RTX Fast technology, as described in refs. [16] and [17]) uses regional tropospheric and ionospheric models to reduce the convergence time to less than 1 minute but the horizontal positioning performance of PPP regional augmentation may still be typically 1 to 2 mm worse than VRS. A reason for the worse horizontal positioning performance is that the additional 2- to 4-second latency may eventually cause about a 2-mm degradation positioning. For example, the latency of PPP regional augmentation may be 3 to 7 seconds whereas the latency of VRS may be about 1 to 3 seconds. Additionally, a VRS system or a single-base RTK solution can eliminate most common line-of-sight errors, while PPP cannot as it is a global service. The advantage of PPP is, however, that it is a broadcast service so that there is no limitation on the number of concurrent users. The disadvantage is the slightly longer convergence time and slightly worse positioning accuracy.

In view of the above, some embodiments of the invention may involve estimating satellite orbit and clock errors with the global (i.e., wide area) network data with an accuracy of a few centimeters (see above-described step s10). For a region (e.g., with a radius of a few hundreds to a thousand kilometers, which corresponds to what a VRS network typically covers), which is the narrow area as described above, the residual error of precise satellite orbit, clock error and other errors like satellite phase center variation of a satellite are almost the same across the narrow area, in view of their common or substantially common line-of-sight dependency. This residual error per satellite can be estimated using the regional network data, i.e. the data from the narrow area reference stations network (see above-described steps s20, s30, s40a, and s40b). The estimated residual error is then added to the satellite clock error estimated from the global network to form a so-called redefined satellite clock error (see above-described steps s50a and s50b), which can then be broadcast (see above-described step s60). As the redefined satellite clock error compensates for residual errors that are not covered by the satellite orbit and clock errors estimated with the wide area network data, the rover position is usually better than the solutions provided by the PPP and PPP regional augmentation systems.

In other words, some embodiments of the invention have been developed with in mind the idea of replacing existing VRS systems with a PPP-like system by re-estimating satellite clock errors to absorb systematic errors common to a region (e.g., a country like Germany). Compared to VRS systems, these embodiments create or may create the ability to provide the following advantages: (a) providing better positioning accuracy for the rover than VRS systems; (b) allowing initialization times of a few seconds; (c) not requiring reset when the rover moves across the network (because no PBS is necessary); (d) using a broadcast protocol instead of the traditional bidirectional communication; and (e) using the same correction messages as in existing PPP and PPP regional augmentation services with less latency so that no change in the rover engine is needed to compute the position. These embodiments are also compatible with the transmission of regional geodetic datum transformation information to allow the rover's position engine to output positions in the regional system (local datum) as described in ref. [8].

In view of the considerations laid out in above section A, let us now describe further embodiments of the invention, together with considerations regarding how these embodiments may be implemented, for example, by software, hardware, firmware, or a combination of any of software, hardware, and firmware.

B. Further embodiments

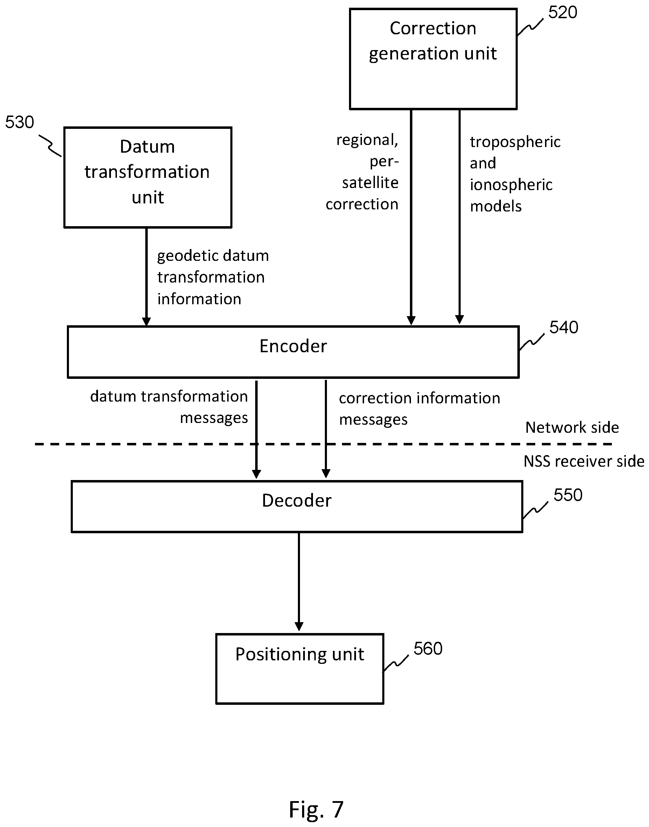

In one embodiment, as schematically illustrated by Fig. 7, a system comprises the following parts: on the network side, a correction generation unit 520, a datum transformation unit 530, and an encoder 540; and, on the NSS receiver side (also called rover side), a decoder 550 and a positioning unit 560.

Correction generation unit 520 receives data from, and/or derived from, a plurality of NSS reference stations (not illustrated in Fig. 7), i.e. both the wide area reference stations and the narrow area reference stations. That is, correction generation unit 520 may (i) obtain precise satellite orbit, satellite clock, and satellite bias information from a PPP correction stream derived from the wide area reference station network (see above-described step s10) (as described for example in ref. [4], Fig. 1 and description related thereto, and in ref. [3], Fig. 3 and description related thereto), (ii) obtain regional troposphere model (as described in ref. [4]) and ionosphere model (as described in ref. [3]) (note: a global ionosphere model may be obtained instead), and (iii) generate regional, per-satellite correction information (which corresponds to the estimated residual errors as discussed above with reference to steps s40a and s40b) that accounts for the residual satellite orbit and clock errors and other common or substantially common line-of-sight dependency errors over the narrow area for the latest epoch which is not available from the PPP correction stream (see above-described steps s20, s30, s40a, and s40b). The regional, per-satellite correction information can be derived from the network geometric correction, i.e. the geometric correction from the narrow area reference stations network.

The ionospheric free carrier phase combination $L_{if}$ can be written as:

$$L_{if} = \frac{f_1^2}{f_1^2 - f_2^2} L_1 - \frac{f_2^2}{f_1^2 - f_2^2} L_2 = \rho + c(dt_r - dt^s) + T + \lambda_{if} N_{if} + (b_{if}^r - b_{if}^s) + \varepsilon \qquad (1)$$

where:

$f_1$ and $f_2$ are the carrier frequencies of L1 and L2 signals respectively;
$L_1$ and $L_2$ are the carrier phase observations for the L1 and L2 signals respectively;
$\rho$ is the geometric distance between APCs of satellite and reference station;
c is the speed of light;
$dt_r$ is the NSS receiver clock error;
$dt^s$ is the NSS satellite clock error;
$T$ is the slant tropospheric delay;
$\lambda_{if}$ is the wavelength for ionospheric free phase combination
$N_{it}$ is the ionospheric free integer ambiguity;

$b_{if}^r$ is the ionospheric free receiver phase bias;

$b_{if}^s$ is the ionospheric free satellite phase bias; and $\varepsilon$ is the noise.

As described in ref. [4], paragraph [0099], the slant delay T can be expressed by the zenith path delay multiplied with a mapping function. There are different ways to estimate troposphere parameters: 1) estimating wet zenith delay, 2) estimating remaining part of the zenith wet delay, 3) estimating total tropospheric scaling factor and 4) estimating wet tropospheric scaling. With ionospheric free carrier phase observations from multiple satellites and multiple epochs, troposphere parameters can be estimated per reference station in the narrow area by using the satellite orbit information and satellite clock error information from the wide area. With the position of the receiver antenna phase center fixed and further ambiguities resolved, the accuracy of estimated ZTD (or troposcaling) can be improved (ref. [4], paragraphs [0155]-[0160]).

Ionospheric free ambiguities are typically not resolved directly, instead, L1 and L2 ambiguity or ambiguity combinations of L1 and L2, like wide lane and narrowlane ambiguities are resolved (ref. [13]). In order to resolve the integer ambiguities, at least the ionospheric free phase bias is required, and this bias may be lumped into to the phase levelled clock error (ref. [12]). Other satellite biases that are useful but not limited to resolving the ambiguities are MW biases (ref. [19]), ionospheric phase bias, differential code bias (ref. [20]), etc.

With the estimated tropospheric delay and resolved ambiguities, a geometric correction $\Delta_{if}$ can be formed as:

$$\Delta_{if} = L_{if} - \rho_0 + (dt^{s0} + b_{if}^{s0}) - \widehat{T}_0 - \lambda_{if} \widehat{N_{if}}$$

$$= (cdt_r + b_{if}^r) + (\Delta\rho - c\Delta dt^s) + \varepsilon \qquad (2)$$

where:

$\rho_0$ is the geometric distance between the APC of the NSS satellite and reference station computed based on satellite orbit information from the wide area reference station network;

$dt^{s0}$ is the satellite clock error obtained from the wide area reference stations network;

$b_{if}^{s0}$ is the satellite ionospheric free phase bias obtained from the wide area network;

$\widehat{T}_0$ is the estimated slant tropospheric delay;

$\widehat{N_{if}}$ is the resolved ionospheric free ambiguity;

$\Delta\rho$ is the residual orbit error mapped to line of sight; and

$\Delta dt^s$ is the residual satellite clock error.

Ionospheric free receiver bias $b_{if}^{r}$ can be lumped into the receiver clock error, assuming the residual orbit error is mostly common to line of sight in the narrow area, equation (2) can be reformulated as

$$\Delta_{if} = d\overline{t}_r + \Delta r^s + \varepsilon \qquad (3)$$

Where $d\overline{t}_r = cdt_r + b_{if}^{r}$ is the lumped receiver clock per station in the narrow area and $\Delta r^s \approx \Delta\rho - \Delta dt^s$ is the residual error per satellite. The residual error per satellite $\Delta r^s$ can be estimated through, for example, a Kalman filter or least squares using the geometric correction from all combinations of satellites/narrow area reference stations. $\Delta r^s$ may include any bias that is mostly common in the line of sight, i.e. satellite phase center variation. $\Delta r^s$ can be added to the obtained satellite clock error $dt^{s0}$ to form the redefined satellite clock error. The redefined satellite clock error can replace the satellite clock error term used in an existing PPP stream. In this case, the rover process needs not be necessarily re-configured.

The redefined satellite clock error may be computed for the latest epoch instead of synchronised epoch to reduce latency. In this case, a satellite orbit and a satellite clock error are predicted to the latest epoch, and the prediction errors are absorbed by the per satellite residual error. The estimated per satellite residual error is added to the predicted satellite clock error to form the redefined satellite clock error. Ambiguities may preferably be resolved at the synchronised epoch to avoid the influence of satellite orbit and clock error prediction error. The ambiguities and ZTD are estimated at the synchronized epoch ($t_1$). If $t_2 - t_1$ is small (a few seconds), it can be assumed that the ZTD does not change between $t_1$ and $t_2$. Further if there is no cycle slip between $t_1$ and $t_2$, the ambiguity estimated at $t_1$ is the same at $t_2$. In case that a cycle slip happened between the synchronised epoch and latest epoch, the observation and the corresponding ambiguity cannot be used in the estimation. ZTD (or other troposphere parameters) may also be estimated at the synchronised epoch. If the time difference between the latest epoch and synchronised epoch is small (a few seconds), ZTD can be assumed to be the same.

Regarding datum transformation unit 530, see the description in ref. [8]. Encoder 540 and decoder 550 are in charge of encoding and decoding the geodetic datum transformation information, the regional, per-satellite correction information, and the tropospheric and ionospheric models.

In a NSS receiver's positioning unit 560, data from a PPP correction stream may be converted to virtual observations (in that respect, see ref. [18]). If the satellite clock error message is replaced by the redefined satellite clock error message, positioning unit 560 need not be changed compared to existing units.

<u>System</u>

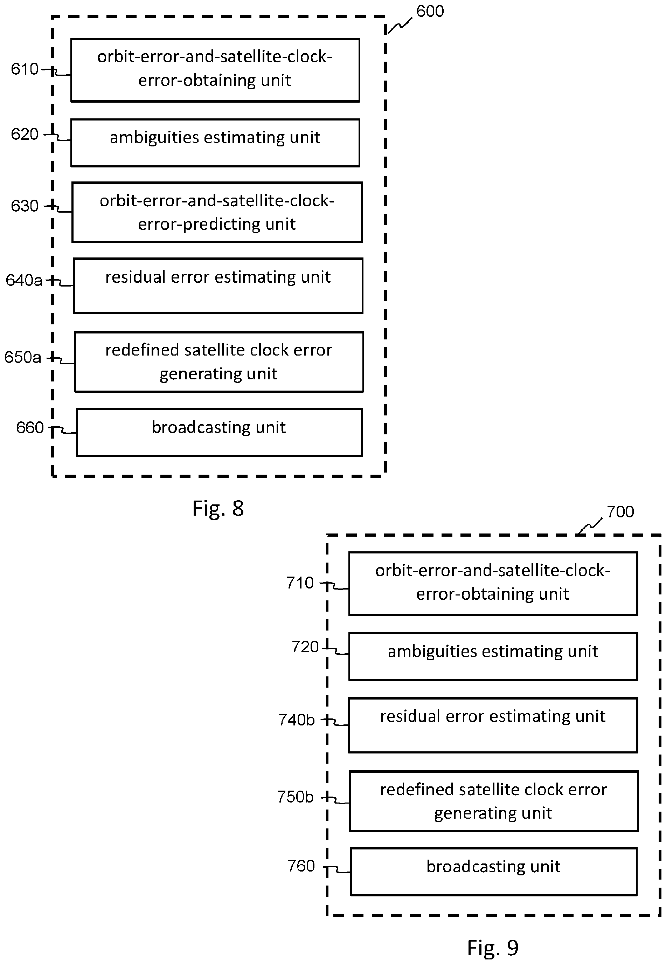

Fig. 8 schematically illustrates a system 600 in one embodiment. System 600 is configured for providing information suitable for use by a NSS receiver and/or a processing entity capable of receiving data from the NSS receiver, for positioning purposes. System 600 comprises a first unit, here referred to as orbit-error-and-satellite-clock-error-obtaining unit 610, a second unit, here referred to as ambiguities estimating unit 620, a third unit, here referred to as orbit-error-and-satellite-clock-error-predicting unit 630, a fourth unit, here referred to as residual error estimating unit 640a, a fifth unit, here referred to as redefined satellite clock error generating unit 650a, and a sixth unit, here referred to as broadcasting unit 660, which are respectively configured for carrying out step s10, s20, s30, s40a, s50a, and s60 as described above with reference to Fig. 1.

Fig. 9 schematically illustrates a system 700 in one embodiment. System 700 is also configured for providing information suitable for use by a NSS receiver and/or a processing entity capable of receiving data from the NSS receiver, for positioning purposes. System 700 comprises a first unit, here referred to as orbit-error-and-satellite-clock-error-obtaining unit 710, a second unit, here referred to as ambiguities estimating unit 720, a third unit, here referred to as residual error estimating unit 740b, a fourth unit, here referred to as redefined satellite clock error generating unit 750b, and a fifth unit, here referred to as broadcasting unit 760, which are respectively configured for carrying out step s10, s20, s40b, s50b, and s60 as described above with reference to Fig. 4.

Additional remarks

Any of the above-described methods and their embodiments may be implemented, at least partially, by means of a computer program or a set of computer programs. The computer program(s) may be loaded on an apparatus or device, such as for example a server (which may comprise one or a plurality of computers), an NSS receiver (running on a rover station, on a moving reference station, or within a vehicle), and/or an NSS receiver chipset for mobile phones or automotive applications. Therefore, the invention also relates, in some embodiments and/or aspects, to a computer program or set of computer programs, which, when carried out on an apparatus or device as described above, such as for example a server, an NSS receiver (running on a rover station, on a moving reference station, or within a vehicle) or an NSS receiver chipset, carries out any one of the above-described methods and their embodiments.

The invention also relates, in some embodiments, to a computer-readable medium or a computer-program product including the above-mentioned computer program. The computer-readable medium or computer-program product may for instance be a magnetic tape, an optical memory disk, a magnetic disk, a magnetooptical disk, an SSD, a CD-ROM, a DVD, a CD, a flash memory unit, or the like, wherein the computer program is permanently or temporarily stored. In some embodiments, a computer-readable medium (or to a computer-program product) has computer-executable instructions for carrying out any one of the methods of the invention.

In one embodiment, a computer program as claimed may be delivered to the field as a computer program product, for example through a firmware or software update to be installed on receivers already in the field. This applies to each of the above-described methods and systems.

As mentioned above, a NSS receiver comprises one or more antennas configured to receive NSS signals at the frequencies broadcasted by the NSS satellites, and a NSS receiver may further comprise processor units, one or a plurality of accurate clocks (such as crystal oscillators), one or a plurality of central processing units (CPU), one or a plurality of memory units (RAM, ROM, flash memory, or the like), and a display for displaying position information to a user.

Where the terms "orbit-error-and-satellite-clock-error-obtaining unit", "ambiguities estimating unit", "orbit-error-and-satellite-clock-error-predicting unit", "residual error estimating unit", "redefined satellite clock error generating unit", "broadcasting unit", and the like are used herein as units (or sub-units) of a system or apparatus, no restriction is made regarding how distributed the constituent parts of a unit (or sub-unit) may be. That is, the constituent parts of a unit (or sub-unit) may be distributed in different software, firmware, or hardware components or devices for bringing about the intended function. Further, the units may be gathered together for performing their functions by means of a combined, single unit (or sub-unit).

For example, in one embodiment, orbit-error-and-satellite-clock-error-obtaining unit 610, ambiguities estimating unit 620, orbit-error-and-satellite-clock-error-predicting unit 630, residual error estimating unit 640a, redefined satellite clock error generating unit 650a, and broadcasting unit 660 are implemented using a single piece of software, a single piece of hardware, and/or as a single piece of firmware.

The above-mentioned units and sub-units may be implemented using hardware, software, firmware, any combination of hardware, software, and firmware, pre-programmed ASICs (application-specific integrated circuits), etc. A unit may include a central processing unit (CPU), a storage unit, input/output (I/O) units, network connection devices, etc.

Although the present invention has been described on the basis of detailed examples, the detailed examples only serve to provide the skilled person with a better understanding and are not intended to limit the scope of the invention. The scope of the invention is defined by the appended claims.

Abbreviations:

| | |
|---|---|
| APC | antenna phase center |
| ASIC | application-specific integrated circuit |
| BDS | BeiDou Navigation Satellite System |
| C/A | coarse/acquisition (code) |
| CD | compact disc |

CD-ROM      compact disk read-only memory
CPU         central processing unit
DCB         differential code bias
DVD         digital versatile disc
GNSS        global navigation satellite system
GPS         Global Positioning System
I/O         input/output
IGS         International GNSS Service
IP          Internet Protocol
LOS         line-of-sight
MW          Melbourne-Wübbena (combination)
NAVIC       NAVigation with Indian Constellation
NSS         navigation satellite system
PBS         physical base station
PPP         precise point positioning
PPP-RTK     precise point positioning real-time kinematic
PRN         pseudo-random noise
QI          quality indicator
QZSS        Quasi-Zenith Satellite System
RAM         random-access memory
ref.        reference
refs.       references
RMS         root mean square
RNSS        regional navigation satellite system
ROM         read-only memory
RTK         real-time kinematic
SNR         signal-to-noise ratio
SSD         solid-state disk
UAV         unmanned aerial vehicle
USV         unmanned surface vehicle/vessel
VRS         virtual reference station
ZTD         zenith total delay

References:

[1] Hofmann-Wellenhof, B., et al., "GNSS, Global Navigation Satellite Systems, GPS, GLONASS, Galileo, & more", Springer-Verlag Wien, 2008.

[2] Jan Van Sickle, "Two Types of Observables I GEOG 862: GPS and GNSS for Geospatial Professionals", John A. Dutton e-Education Institute, College of Earth and Mineral Sciences, The Pennsylvania State University, retrieved on November 8, 2021, from https://www.e-education.psu.edu/geog862/node/1752

[3] EP 3 035 080 A1, titled "Navigation satellite system positioning involving the generation of correction information" (Trimble ref.: A4396).

[4] EP 3 130 943 A1, titled "Navigation satellite system positioning involving the generation of tropospheric correction information" (Trimble ref.: 15072-EPO).

[5] RTCM Special Committee. "RTCM standard 10403.3 differential GNSS (global navigation satellite systems) services-version 3." RTCM Special Committee 104 (2016).

[6] Trimble (June 2009). "CMRx: A new correction format from Trimble". White paper, Trimble Navigation Ltd. Retrieved on May 17, 2023, from http://trl.trimble.com/docushare/dsweb/Get/Document-469944/WhitePaper_HeavyHighway_CMRxrev1.pdf

[7] US 2010/0214166 A1, titled "Double-nudged broadcast orbit drift correction"

[8] Co-pending European patent application EP 23 182 582.9, filed on June 30, 2023, and titled "Methods and systems for providing geodetic datum transformation information for positioning purposes" (Trimble ref.: EP-22056).

[9] EP 3 293 549 A1, titled "Advanced navigation satellite system positioning method and system using delayed precise information" (Trimble ref.: 16029-EPO).

[10] Chen, Xiaoming, et al. "Trimble RTX, an innovative new approach for network RTK." Proceedings of the 24th international technical meeting of the satellite division of the institute of navigation (ION GNSS 2011). 2011.

[11] US 8,847,820 B2, titled "GNSS signal processing to estimate orbits"

[12] US 9,157,999 B2, titled "GNSS signal processing to estimate phase-leveled clocks"

[13] M. Glaner, et al. "PPP with integer ambiguity resolution for GPS and Galileo using satellite products from different analysis centers", GPS Solutions (2021) 25:102 https://doi.org/10.1007/s10291-021-01140-z

[14] J. Mendez Astudillo, L. Lau, Y.-T. Tang, and T. Moore. "Analysing the Zenith Tropospheric Delay Estimates in On-line Precise Point Positioning (PPP) Services and PPP software Packages", Sensors 18.2 (2018): 580

[15] Q. Zhao, Y. Yao, W. Yao, Z. LI, "Real-time precise point positioning-based zenith tropospheric delay for precipitation forecasting", Sci Rep 8, 7939 (2018). https://doi.org/10.1038/s41598-018-26299-3

[16] Nardo, A., et al. "Experiences with Trimble CenterPoint RTX with Fast Convergence", ENC (European Navigation Conference) GNSS 2015, 7-10 April 2015, Bordeaux, France.

[17] Weinbach U., et al. "Introducing the Next Generation of Trimble's RTX Positioning Service", Proceedings of the 34th International Technical Meeting of the Satellite Division of The Institute of Navigation (ION GNSS+ 2021), St. Louis, Missouri, September 2021, pp. 424-442.

[18] WO 2011/034614 A2, titled "GNSS Signal processing with synthesized base station data", U. Vollath, X. Chen, R. Leandro

[19] US 2012/0163419 A1, titled "GNSS Signal Processing to Estimate MW Biases"

[20] US 9,170,335 B2, titled "GNSS signal processing with ionosphere model for synthetic reference data"

[21] US 11,187,813 B2, titled "Correction information integrity monitoring in navigation satellite system positioning methods, systems, and devices"

**Claims**

1. Method for providing information suitable for use by at least one of

   a navigation satellite system, hereinafter abbreviated as "NSS", receiver and
   a processing entity capable of receiving data from the NSS receiver

   in contributing to computing a positioning solution based on NSS signals received by the NSS receiver, the method comprising:

   obtaining (s10), for each of a plurality of NSS satellites, satellite orbit information and satellite clock error information, wherein

   the satellite orbit information and satellite clock error information is applicable over the entire surface of the Earth or over a first region of the surface of the Earth, the entire surface of the Earth or the first region, whichever is applicable, being hereinafter referred to as "wide area"; and
   the satellite orbit information and satellite clock error information is applicable to an epoch $t_1$;

   for each of a plurality of reference stations, hereinafter referred to "narrow area reference stations", and for epoch $t_1$, estimating (s20) ambiguities in the carrier phase of NSS signals received at epoch $t_1$ at the narrow area reference station, wherein

   the narrow area reference stations are spread over a second region of the surface of the Earth, hereinafter referred to as "narrow area"; and
   the narrow area forms a part of, or at least overlaps with, the wide area and has a size being smaller than, or equal to, $n$ times the size of the wide area, wherein $n$ is a number smaller than, or equal to, 0.34;

   predicting (s30), for each of the NSS satellites, a satellite orbit and a satellite clock error at an epoch $t_2$, wherein epoch $t_2$ is equal to epoch $t_1$ plus d, and d is a time delay that is larger than zero;
   for each of the NSS satellites, for epoch $t_2$, and for the narrow area, estimating (s40a) a residual error for modelling errors having a common or substantially common line-of-sight dependency, using

   NSS signals received at epoch $t_2$ at the narrow area reference stations;
   the predicted satellite orbit and satellite clock error at epoch $t_2$,
   if there is no cycle slip between epoch $t_1$ and epoch $t_2$, the estimated ambiguities in the carrier phase of NSS signals received at epoch $t_1$ at the narrow area reference stations; and
   an estimated troposphere delay at each of the narrow area reference stations;

adding (s50a), for each of the NSS satellites, the residual error estimated for epoch $t_2$ to the predicted satellite clock error, the result of the addition being hereinafter referred to as "redefined satellite clock error"; and broadcasting (s60), for each of the NSS satellites, the redefined satellite clock error and the obtained satellite orbit information.

2. Method of claim 1, wherein epoch $t_2$ is, at the time of predicting (s30) the satellite orbit and satellite clock error, the latest epoch.

3. Method for providing information suitable for use by at least one of

a navigation satellite system, hereinafter abbreviated as "NSS", receiver and
a processing entity capable of receiving data from the NSS receiver

in contributing to computing a positioning solution based on NSS signals received by the NSS receiver, the method comprising:

obtaining (s10), for each of a plurality of NSS satellites, satellite orbit information and satellite clock error information, wherein

the satellite orbit information and satellite clock error information is applicable over the entire surface of the Earth or over a first region of the surface of the Earth, the entire surface of the Earth or the first region, whichever is applicable, being hereinafter referred to as "wide area"; and
the satellite orbit information and satellite clock error information is applicable to an epoch $t_1$;

for each of a plurality of reference stations, hereinafter referred to "narrow area reference stations", and for epoch $t_1$, estimating (s20) ambiguities in the carrier phase of NSS signals received at epoch $t_1$ at the narrow area reference station, wherein

the narrow area reference stations are spread over a second region of the surface of the Earth, hereinafter referred to as "narrow area"; and
the narrow area forms a part of, or at least overlaps with, the wide area and has a size being smaller than, or equal to, $n$ times the size of the wide area, wherein $n$ is a number smaller than, or equal to, 0.34;

for each of the NSS satellites, for epoch $t_1$, and for the narrow area, estimating (s40b) a residual error for modelling errors having a common or substantially common line-of-sight dependency, using

NSS signals received at epoch $t_1$ at the narrow area reference stations;
the obtained satellite orbit information and satellite clock error information applicable at epoch $t_1$;
the estimated ambiguities in the carrier phase of NSS signals received at epoch $t_1$ at the narrow area reference stations; and
an estimated troposphere delay at each of the narrow area reference stations;

adding (s50b), for each of the NSS satellites, the residual error estimated for epoch $t_1$ to a satellite clock error that is based on the obtained satellite clock error information, the result of the addition being hereinafter referred to as "redefined satellite clock error"; and
broadcasting (s60), for each of the NSS satellites, the redefined satellite clock error and the obtained satellite orbit information.

4. Method according to any one of the preceding claims, wherein obtaining (s10), for each of the NSS satellites, the satellite orbit information applicable to epoch $t_1$ comprises one of:

estimating the satellite orbit information based on NSS signals received at a plurality of reference stations spread over the wide area; and
receiving the satellite orbit information.

5. Method according to any one of the preceding claims, wherein obtaining (s10), for each of the NSS satellites, the satellite clock error information applicable to epoch $t_1$ comprises one of:

estimating the satellite clock error information based on NSS signals received at a plurality of reference stations spread over the wide area; and

receiving the satellite clock error information.

6. Method according to any one of the preceding claims, further comprising obtaining, for each of a plurality of NSS satellites, at least one satellite signal bias that is useful to resolve ambiguities, the at least one satellite signal bias preferably comprising at least one of:

a phase bias;
a code bias; and
a code phase bias.

7. Method according to any one of the preceding claims, wherein the residual error comprises at least one of:

a residual satellite orbit,
a residual satellite clock error, and
a residual satellite antenna phase center variation error.

8. Method of claim 7, wherein the residual error comprises a lumped sum of the residual satellite orbit, the residual satellite clock error, and the residual satellite antenna phase center variation error.

9. Method according to any one of the preceding claims, wherein n is a number selected within the range from 0.0002 to 0.34, preferably a number selected within the range from 0.0004 to 0.1.

10. Method according to any one of the preceding claims, further comprising:
broadcasting (s70), for each of the NSS satellites, a quality indicator providing a measure of accuracy of the redefined satellite clock error.

11. System for providing information suitable for use by at least one of

a navigation satellite system, hereinafter abbreviated as "NSS", receiver and
a processing entity capable of receiving data from the NSS receiver

in contributing to computing a positioning solution based on NSS signals received by the NSS receiver, the system being configured for:

obtaining, for each of a plurality of NSS satellites, satellite orbit information and satellite clock error information, wherein

the satellite orbit information and satellite clock error information is applicable over the entire surface of the Earth or over a first region of the surface of the Earth, the entire surface of the Earth or the first region, whichever is applicable, being hereinafter referred to as "wide area"; and
the satellite orbit information and satellite clock error information is applicable to an epoch $t_1$;

for each of a plurality of reference stations, hereinafter referred to "narrow area reference stations", and for epoch $t_1$, estimating ambiguities in the carrier phase of NSS signals received at epoch $t_1$ at the narrow area reference station, wherein

the narrow area reference stations are spread over a second region of the surface of the Earth, hereinafter referred to as "narrow area"; and
the narrow area forms a part of, or at least overlaps with, the wide area and has a size being smaller than, or equal to, $n$ times the size of the wide area, wherein $n$ is a number smaller than, or equal to, 0.34;

predicting, for each of the NSS satellites, a satellite orbit and a satellite clock error at an epoch $t_2$, wherein epoch $t_2$ is equal to epoch $t_1$ plus d, and d is a time delay that is larger than zero;
for each of the NSS satellites, for epoch $t_2$, and for the narrow area, estimating (s40a) a residual error for modelling errors having a common or substantially common line-of-sight dependency, using

NSS signals received at epoch $t_2$ at the narrow area reference stations;
the predicted satellite orbit and satellite clock error at epoch $t_2$,
if there is no cycle slip between epoch $t_1$ and epoch $t_2$, the estimated ambiguities in the carrier phase of NSS signals received at epoch $t_1$ at the narrow area reference stations; and
an estimated troposphere delay at each of the narrow area reference stations;

adding, for each of the NSS satellites, the residual error estimated for epoch $t_2$ to the predicted satellite clock error, the result of the addition being hereinafter referred to as "redefined satellite clock error"; and
broadcasting, for each of the NSS satellites, the redefined satellite clock error and the obtained satellite orbit information.

12. System for providing information suitable for use by at least one of

a navigation satellite system, hereinafter abbreviated as "NSS", receiver and
a processing entity capable of receiving data from the NSS receiver

in contributing to computing a positioning solution based on NSS signals received by the NSS receiver, the system being configured for:

obtaining, for each of a plurality of NSS satellites, satellite orbit information and satellite clock error information, wherein

the satellite orbit information and satellite clock error information is applicable over the entire surface of the Earth or over a first region of the surface of the Earth, the entire surface of the Earth or the first region, whichever is applicable, being hereinafter referred to as "wide area"; and
the satellite orbit information and satellite clock error information is applicable to an epoch $t_1$;

for each of a plurality of reference stations, hereinafter referred to "narrow area reference stations", and for epoch $t_1$, estimating ambiguities in the carrier phase of NSS signals received at epoch $t_1$ at the narrow area reference station, wherein

the narrow area reference stations are spread over a second region of the surface of the Earth, hereinafter referred to as "narrow area"; and
the narrow area forms a part of, or at least overlaps with, the wide area and has a size being smaller than, or equal to, $n$ times the size of the wide area, wherein $n$ is a number smaller than, or equal to, 0.34;

for each of the NSS satellites, for epoch $t_1$, and for the narrow area, estimating, a residual error for modelling errors having a common or substantially common line-of-sight dependency, using

NSS signals received at epoch $t_1$ at the narrow area reference stations;
the obtained satellite orbit information and satellite clock error information applicable at epoch $t_1$;
the estimated ambiguities in the carrier phase of NSS signals received at epoch $t_1$ at the narrow area reference stations; and
an estimated troposphere delay at each of the narrow area reference stations;

adding, for each of the NSS satellites, the residual error estimated for epoch $t_1$ to a satellite clock error that is based on the obtained satellite clock error information, the result of the addition being hereinafter referred to as "redefined satellite clock error"; and
broadcasting, for each of the NSS satellites, the redefined satellite clock error and the obtained satellite orbit information.

13. Computer program or set of computer programs comprising computer-readable instructions configured, when executed on a computer or set of computers, to cause the computer or set of computers to carry out a method according to any one of claims 1 to 10.

14. Computer program product or storage mediums comprising a computer program or set of computer programs according to claim 13.

15. System of claim 11 or 12 and NSS receiver system, the NSS receiver system being configured for receiving, for each of the NSS satellites, the redefined satellite clock error and the obtained satellite orbit error information, wherein, preferably, the NSS receiver system is at least one of: embedded into a vehicle, attached to a vehicle, embedded into a mobile device, attached to a mobile device, used in a construction site application, and used in a surveying application.

s10 ⌐ obtaining, for each of a plurality of NSS satellites, satellite orbit information and satellite clock error information applicable over a wide area and to epoch $t_1$

s20 ⌐ for each of the narrow area reference stations and for epoch $t_1$, estimating ambiguities in the carrier phase of NSS signals received at epoch $t_1$ at the narrow area reference station

s30 ⌐ predicting, for each of the NSS satellites, the satellite orbit and satellite clock error at epoch $t_2$, wherein $t_2 = t_1 + d$

s40a ⌐ for each of the NSS satellites and for epoch $t_2$, estimating a residual error for modelling errors having a common or substantially common line-of-sight dependency in the narrow area

s50a ⌐ adding, for each of the NSS satellites, the residual error estimated for epoch $t_2$ to the predicted satellite clock error, the result being the "redefined satellite clock error"

s60 ⌐ broadcasting, for each of the NSS satellites, the redefined satellite clock error and the obtained satellite orbit information applicable over the wide area

Fig. 1

Fig. 2b

Fig. 2a

22

Fig. 2c

Fig. 3

s10 ⌐ᒣ

obtaining, for each of a plurality of NSS satellites,
satellite orbit information and satellite clock error
information applicable over a wide area
and to epoch $t_1$

s20 ⌐ᒣ

for each of the narrow area reference stations and for
epoch $t_1$, estimating ambiguities in the carrier phase
of NSS signals received at epoch $t_1$ at the narrow area
reference station

s40b ⌐ᒣ

for each of the NSS satellites and for epoch $t_1$,
estimating a residual error for modelling errors having
a common or substantially common line-of-sight
dependency in the narrow area

s50b ⌐ᒣ

adding, for each of the NSS satellites, the residual
error estimated for epoch $t_1$ to a satellite clock error
that is based on the obtained satellite clock error
information, the result being the "redefined satellite
clock error"

s60 ⌐ᒣ

broadcasting, for each of the NSS satellites, the
redefined satellite clock error and the obtained
satellite orbit information applicable over the wide
area

Fig. 4

s10 — obtaining, for each of a plurality of NSS satellites, satellite orbit information and satellite clock error information applicable over a wide area and to epoch $t_1$

↓

s20 — for each of the narrow area reference stations and for epoch $t_1$, estimating ambiguities in the carrier phase of NSS signals received at epoch $t_1$ at the narrow area reference station

↓

s30 — predicting, for each of the NSS satellites, the satellite orbit and satellite clock error at epoch $t_2$, wherein $t_2 = t_1 + d$

↓

s40a — for each of the NSS satellites and for epoch $t_2$, estimating a residual error for modelling errors having a common or substantially common line-of-sight dependency in the narrow area

↓

s50a — adding, for each of the NSS satellites, the residual error estimated for epoch $t_2$ to the predicted satellite clock error, the result being the "redefined satellite clock error"

↓

s60 — broadcasting, for each of the NSS satellites, the redefined satellite clock error and the obtained satellite orbit information applicable over the wide area

↓

s70 — broadcasting, for each of the NSS satellites, a quality indicator providing a measure of accuracy of the redefined satellite clock error

Fig. 5

s10 — obtaining, for each of a plurality of NSS satellites, satellite orbit information and satellite clock error information applicable over a wide area and to epoch $t_1$

s20 — for each of the narrow area reference stations and for epoch $t_1$, estimating ambiguities in the carrier phase of NSS signals received at epoch $t_1$ at the narrow area reference station

s40b — for each of the NSS satellites and for epoch $t_1$, estimating a residual error for modelling errors having a common or substantially common line-of-sight dependency in the narrow area

s50b — adding, for each of the NSS satellites, the residual error estimated for epoch $t_1$ to a satellite clock error that is based on the obtained satellite clock error information, the result being the "redefined satellite clock error"

s60 — broadcasting, for each of the NSS satellites, the redefined satellite clock error and the obtained satellite orbit information applicable over the wide area

s70 — broadcasting, for each of the NSS satellites, a quality indicator providing a measure of accuracy of the redefined satellite clock error

Fig. 6

Fig. 7

600

610 — orbit-error-and-satellite-clock-error-obtaining unit

620 — ambiguities estimating unit

630 — orbit-error-and-satellite-clock-error-predicting unit

640a — residual error estimating unit

650a — redefined satellite clock error generating unit

660 — broadcasting unit

Fig. 8

700

710 — orbit-error-and-satellite-clock-error-obtaining unit

720 — ambiguities estimating unit

740b — residual error estimating unit

750b — redefined satellite clock error generating unit

760 — broadcasting unit

Fig. 9

Europäisches
Patentamt

European
Patent Office

Office européen
des brevets

# EUROPEAN SEARCH REPORT

**Application Number**

EP 23 20 6396

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2022/058322 A1 (BRANDL MARKUS [DE] ET AL) 24 February 2022 (2022-02-24) <br> * abstract * <br> * figure 2b * <br> * paragraphs [0002] – [0028] * <br> * paragraphs [0055] – [0082] * <br> * paragraph [0154] * <br> ----- | 1-15 | INV. <br> G01S19/07 <br><br> ADD. <br> G01S19/44 |
| A | CN 108 089 214 A (BEJING SATELLITE NAVIGATION CENTER ET AL.) 29 May 2018 (2018-05-29) <br> * the whole document * <br> ----- | 1-15 | |

**TECHNICAL FIELDS SEARCHED (IPC)**

G01S

The present search report has been drawn up for all claims

| Place of search | Date of completion of the search | Examiner |
|---|---|---|
| Munich | 18 April 2024 | Haugg, Sabine |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
...................................................................................
& : member of the same patent family, corresponding
document

EPO FORM 1503 03.82 (P04C01)

**ANNEX TO THE EUROPEAN SEARCH REPORT
ON EUROPEAN PATENT APPLICATION NO.**

EP 23 20 6396

This annex lists the patent family members relating to the patent documents cited in the above-mentioned European search report.
The members are as contained in the European Patent Office EDP file on
The European Patent Office is in no way liable for these particulars which are merely given for the purpose of information.

18-04-2024

| Patent document cited in search report | | Publication date | Patent family member(s) | | Publication date |
|---|---|---|---|---|---|
| US 2022058322 | A1 | 24-02-2022 | EP | 3627188 A1 | 25-03-2020 |
| | | | US | 2020096649 A1 | 26-03-2020 |
| | | | US | 2022058322 A1 | 24-02-2022 |
| CN 108089214 | A | 29-05-2018 | CN | 108089214 A | 29-05-2018 |
| | | | EP | 3525009 A2 | 14-08-2019 |
| | | | US | 2020025936 A1 | 23-01-2020 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3035080 A1
- EP 3130943 A1
- US 20100214166 A1
- EP 23182582 A
- EP 3293549 A1
- US 8847820 B2
- US 9157999 B2
- WO 2011034614 A2, U. Vollath, X. Chen, R. Leandro
- US 20120163419 A1
- US 9170335 B2
- US 11187813 B2

**Non-patent literature cited in the description**

- **HOFMANN-WELLENHOF, B. et al.** GNSS, Global Navigation Satellite Systems, GPS, GLONASS, Galileo, & more. Springer-Verlag Wien, 2008
- **JAN VAN SICKLE**. Two Types of Observables I GEOG 862: GPS and GNSS for Geospatial Professionals. John A. Dutton e-Education Institute, College of Earth and Mineral Sciences, The Pennsylvania State University, 08 November 2021
- RTCM standard 10403.3 differential GNSS (global navigation satellite systems) services-version 3.. RTCM Special Committee, 2016, vol. 104
- CMRx: A new correction format from Trimble. **TRIMBLE**. White paper. Trimble Navigation Ltd., June 2009
- **CHEN** ; **XIAOMING et al.** Trimble RTX, an innovative new approach for network RTK.'' Proceedings of the 24th international technical meeting of the satellite division of the institute of navigation. *ION GNSS 2011*, 2011
- **M. GLANER et al.** PPP with integer ambiguity resolution for GPS and Galileo using satellite products from different analysis centers. *GPS Solutions*, 2021, vol. 25, 102, https://doi.org/10.1007/s10291-021-01140-z
- **J. MENDEZ ASTUDILLO** ; **L. LAU** ; **Y.-T. TANG** ; **T. MOORE**. Analysing the Zenith Tropospheric Delay Estimates in On-line Precise Point Positioning (PPP) Services and PPP software Packages. *Sensors*, 2018, vol. 18 (2), 580
- **Q. ZHAO** ; **Y. YAO** ; **W. YAO** ; **Z. LI**. Real-time precise point positioning-based zenith tropospheric delay for precipitation forecasting. *Sci Rep*, 2018, vol. 8, 7939, https://doi.org/10.1038/s41598-018-26299-3
- **NARDO, A. et al.** Experiences with Trimble CenterPoint RTX with Fast Convergence. *ENC (European Navigation Conference) GNSS 2015*, April 2015, 7-10
- **WEINBACH U. et al.** Introducing the Next Generation of Trimble's RTX Positioning Service. *Proceedings of the 34th International Technical Meeting of the Satellite Division of The Institute of Navigation (ION GNSS+ 2021), St. Louis, Missouri*, September 2021, 424-442